(19) Europäisches Patentamt
European Patent Office
Office européen des brevets

(11) Veröffentlichungsnummer : **0 169 457**
**B1**

(12) # EUROPÄISCHE PATENTSCHRIFT

(45) Veröffentlichungstag der Patentschrift : **02.03.88**

(51) Int. Cl.[4] : **C 09 B 62/51**, D 06 P 1/384

(21) Anmeldenummer : **85108702.3**

(22) Anmeldetag : **12.07.85**

(54) **Wasserlösliche Pyridon-Monoazoverbindungen, Verfahren zu ihrer Herstellung und ihre Verwendung als Farbstoffe.**

(30) Priorität : **24.07.84 DE 3427188**

(43) Veröffentlichungstag der Anmeldung : **29.01.86 Patentblatt 86/05**

(45) Bekanntmachung des Hinweises auf die Patenterteilung : **02.03.88 Patentblatt 88/09**

(84) Benannte Vertragsstaaten : **CH DE FR GB IT LI**

(56) Entgegenhaltungen :
**DE-A- 2 150 598**
**FR-A- 2 248 301**
**FR-A- 2 254 675**
**US-A- 3 926 944**

(73) Patentinhaber : **HOECHST AKTIENGESELLSCHAFT**
**Postfach 80 03 20**
**D-6230 Frankfurt am Main 80 (DE)**

(72) Erfinder : **Segal, Marcos, Dr.**
**Berliner Strasse 10**
**D-6238 Hofheim am Taunus (DE)**

**EP 0 169 457 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem technischen Gebiet der faserreaktiven Farbstoffe.

Aus der britischen Patentschrift Nr. 1 372 527 und aus der britischen Patentanmeldungs-Veröffentlichung Nr. 2 010 882 A sind Pyridon-Monoazofarbstoffe bekannt, deren Färbungen keine ausreichende Alkaliechtheit besitzen. Sie erleiden gegenüber Alkalien, wie Natriumcarbonat, Farbtonänderungen. Darüber hinaus lassen sich diese Azofarbstoffe mit der 3-Sulfopyridon-Kupplungskomponente nur mit Schwierigkeiten einheitlich darstellen, da die Bindung der in 3-Stellung befindlichen Sulfogruppe gegenüber Säure labil ist.

Ebenso weisen die Färbungen von in der deutschen Auslegeschrift Nr. 1 924 570 beschriebenen Pyridon-Monoazofarbstoffen keine ausreichende Alkaliechtheit auf, und ihre Lichtechtheit ist ebenso nicht zufriedenstellend.

Weiterhin sind aus der US-A-3 926 944 wasserlösliche Monoazo- und Disazoreaktivfarbstoffe bekannt, deren Kupplungskomponenten aus einer großen Zahl unterschiedlich substituierter Pyridone ausgewählt werden können und deren Diazokomponenten mindestens eine Sulfogruppe und mindestens eine Reaktivgruppe, die mit Cellulose reagieren kann, enthalten müssen. Diese Reaktivfarbstoffe sind zum Färben von Textilmaterialien aus Cellulose geeignet.

Mit der vorliegenden Erfindung wurden nunmehr neue Monoazoverbindungen entsprechend der allgemeinen Formel (1)

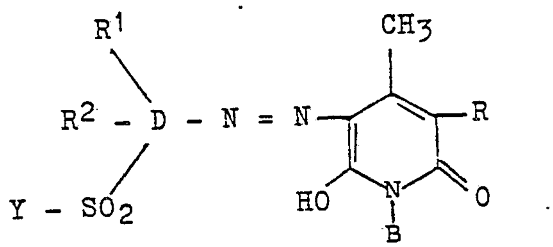

(1)

gefunden, die in überraschender Weise verbesserte Eigenschaften besitzen.

In dieser Formel (1) bedeuten :

D ist ein Benzolring oder ein Naphthalinring oder ein Rest der Formel (2) oder (3)

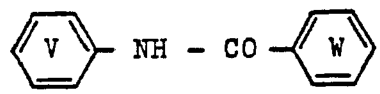

(2)

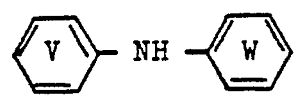

(3)

$R^1$ ist ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, eine Hydroxygruppe, eine Nitrogruppe oder ein Halogenatom, wie ein Chloratom oder insbesondere ein Bromatom, falls D für den Benzolring steht, und

$R^2$ ist ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, ein Halogenatom, wie ein Chloratom oder insbesondere ein Bromatom, eine Carboxygruppe (entsprechend der allgemeinen Formel —COOM mit M der nachstehend angegebenen Bedeutung) oder eine Sulfogruppe, falls D für den Benzolring steht, oder

$R^1$ ist ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, eine Carboxygruppe oder ein Halogenatom, wie ein Chloratom oder insbesondere ein Bromatom, oder bevorzugt eine Sulfogruppe (entsprechend der allgemeinen Formel $—SO_3M$ mit M der nachstehend angegebenen Bedeutung) oder eine Gruppe der Formel $—SO_2—Y$ (mit Y der nachstehend angegebenen Bedeutung), falls D für einen Naphthalinrest steht, und

$R^2$ ist ein Wasserstoffatom oder bevorzugt eine Sulfogruppe, falls D ein Naphthylrest ist, oder

$R^1$ ist, falls D ein Rest der Formel (2) ist, ein Wasserstoffatom, eine Nitrogruppe, ein Chloratom oder eine Alkoxygruppe von 1 bis 4 C-Atome, wie insbesondere die Methoxygruppe, wobei $R^1$ an den Benzolkern V gebunden ist, und

$R^2$ ist, falls D ein Rest der Formel (2) ist, ein Chloratom, eine Sulfogruppe oder eine Nitrogruppe oder

bevorzugt ein Wasserstoffatom, wobei $R^2$ an den Benzolkern W gebunden ist, oder

$R^1$ ist, falls D ein Rest der Formel (3) ist, ein Wasserstoffatom, eine Nitrogruppe oder eine Sulfogruppe, wobei $R^1$ an den Benzolkern V gebunden ist, und

$R^2$ ist, falls D ein Rest der Formel (3) ist, ein Chloratom oder eine Sulfogruppe oder bevorzugt ein Wasserstoffatom, wobei $R^2$ an den Benzolkern W gebunden ist ;

die Gruppe $—SO_2—Y$ ist in den Formeln (2) und (3) and V oder W, bevorzugt an V, gebunden ;

Y ist die Vinylgruppe oder eine Ethylgruppe, die in β-Stellung einen als Anion alkalisch eliminierbaren Substituenten gebunden enthält, wie beispielsweise eine β-Thiosulfatoethyl-Gruppe (entsprechend der allgemeinen Formel $—CH_2—CH_2—S—SO_3M$ mit M der nachstehend angegebenen Bedeutung), eine β-Phosphatoethyl-Gruppe (entsprechend der allgemeinen Formel $—CH_2—CH_2—OPO_3M_2$ mit M der nachstehend angegebenen Bedeutung), die β-Chlorethyl-Gruppe, eine β-($C_2$-$C_5$-Alkanoyloxy)-ethyl-Gruppe, wie die β-Acetyloxyethyl-Gruppe und vorzugsweise eine β-Sulfatoethyl-Gruppe (entsprechend der allgemeinen Formel $—CH_2—CH_2—OSO_3M$ mit M der nachstehend angegebenen Bedeutung) ;

R ist ein Wasserstoffatom oder die Carbamoylgruppe ;

B ist eine Alkylgruppe von 1 bis 4 C-Atomen, wie die Methylgruppe und Propylgruppe und insbesondere die Ethylgruppe, die durch eine Sulfatogruppe (entsprechend der allgemeinen Formel $—OSO_3M$ mit M der nachstehend angegebenen Bedeutung), eine Phosphatogruppe (entsprechend der allgemeinen Formel $—OPO_3M_2$ mit M der nachstehend angegebenen Bedeutung), eine Carboxygruppe oder eine Sulfogruppe substituiert ist ;

M ist ein Wasserstoffatom oder das Äquivalent eines ein-, zwei- oder dreiwertigen Metalls, insbesondere eines Alkali- oder Erdalkalimetalls, wie des Natriums, Kaliums, Lithiums oder Calciums ;

die Formelglieder B, $R^1$, $R^2$ und R können zueinander gleiche oder voneinander verschiedene Bedeutungen besitzen.

Von den erfindungsgemäßen Verbindungen der allgemeinen Formel (1) sind diejenigen besonders hervorzuheben, in denen das Formelglied D den 2-Naphthylrest darstellt oder $R^2$ eine Carboxygruppe oder Sulfogruppe ist oder $R^1$ ein Wasserstoffatom bedeutet oder die diese bevorzugten Gruppen in kombinierter Form enthalten. Ebenso bevorzugt sind diejenigen erfindungsgemäßen Verbindungen, in denen das Formelglied Y die Vinylgruppe bedeutet und insbesondere eine β-Sulfatoethyl-Gruppe ist. Weiterhin bevorzugt sind Verbindungen, in welchen R für ein Wasserstoff steht und/oder in welchen B eine durch eine Sulfogruppe oder Carboxygruppe substituierte Alkylgruppe von 1 bis 3 C-Atomen ist, insbesondere die β-Sulfoethyl-Gruppe bedeutet.

Sofern D ein Phenylrest ist, befindet sich die Gruppe $—SO_2—Y$ bevorzugt in meta- oder para-Stellung zur Azogruppe gebunden.

Insbesondere bevorzugt sind erfindungsgemäße Monoazoverbindungen entsprechend der allgemeinen Formel (4a) oder (4b) oder (4c)

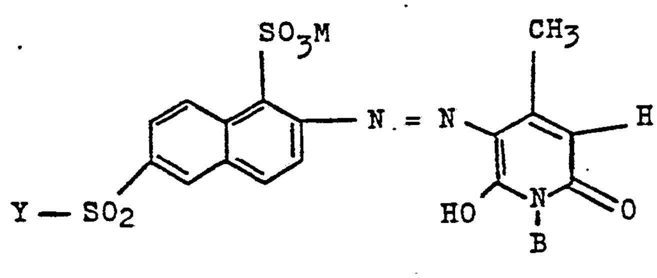

(4a)

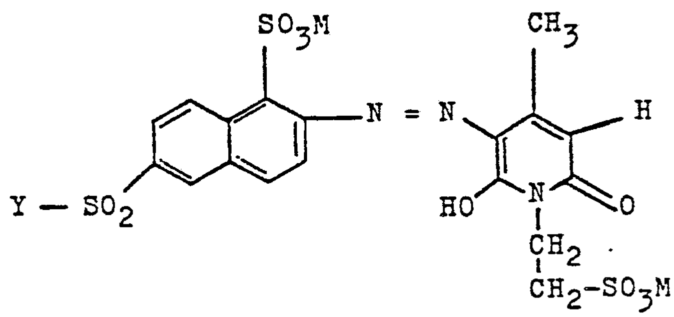

(4b)

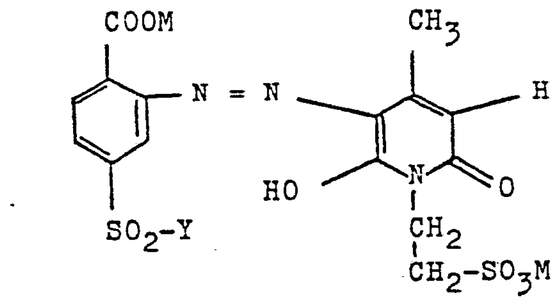

(4c)

in welchen B, M und Y die obengenannten, insbesondere bevorzugten Bedeutungen besitzen.

Die neuen Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der obengenannten und definierten Verbindungen der allgemeinen Formel (1). Diese sind dadurch gekennzeichnet, daß man eine Diazoniumverbindung eines Amins der allgemeinen Formel (5)

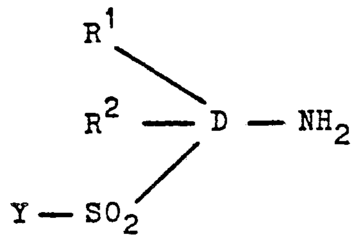

(5)

in welcher $R^1$, $R^2$ und Y die obengenannten Bedeutungen haben, mit einer Pyridonverbindung der allgemeinen Formel (6)

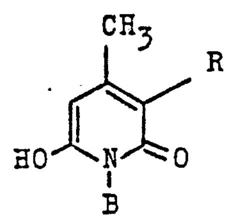

(6)

in welcher R und B die obengenannten Bedeutungen haben, kuppelt oder daß man eine Azoverbindung der allgemeinen Formel (7)

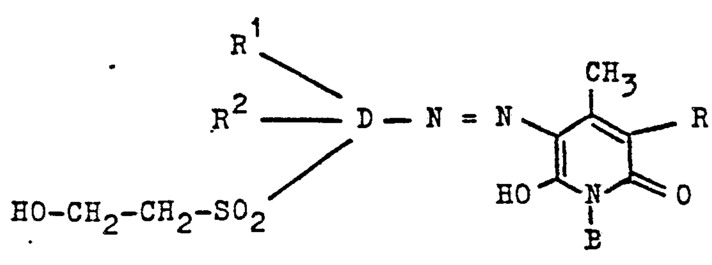

(7)

in welcher $R^1$, $R^2$, R, B und D die obengenannten Bedeutungen besitzen, mittels eines für die Endverbindung der allgemeinen Formel (1) entsprechenden Veresterungs- oder Acylierungsmittels in analoger Weise zu bekannten Verfahrensweisen in eine Verbindung entsprechend der allgemeinen Formel (1) überführt, in welcher Y für eine Ethylgruppe steht, die in β-Stellung durch eine Estergruppe, wie beispielsweise eine niedere Alkanoyloxy-, eine Sulfato- oder eine Phosphatogruppe, substituiert ist. Solche Veresterungs- und Acylierungsmittel sind beispielsweise Acetylchlorid, Eisessig, Acetanhydrid, Polyphosphorsäure, Phosphoroxychlorid und Phosphorpentachlorid sowie die nachstehend genannten Sulfatierungsmittel. Denn bevorzugt ist hierbei als Veresterung die Sulfatisierung, d. h. die Überführung der β-Hydroxyethyl-Gruppe der Verbindung der Formel (7) in eine β-Sulfatoethyl-Gruppe, die analog zahlreich aus der Literatur bekannten Verfahrensweisen durchgeführt werden kann. Sulfatierungsmittel sind vorzugsweise konzentrierte Schwefelsäure und Schwefeltrioxid enthaltende Schwefelsäure (Oleum).

Verbindungen entsprechend der allgemeinen Formel (1), in welchen R für die Carbamoylgruppe steht und Y eine β-Sulfatoäthyl-Gruppe bedeutet und die gemäß der letzten Verfahrensweise durch Sulfatierung

einer entsprechenden Verbindung der allgemeinen Formel (7) hergestellt werden sollen, lassen sich in erfindungsgemäßer Weise auch durch Sulfatisierung einer Verbindung der allgemeinen Formel (8)

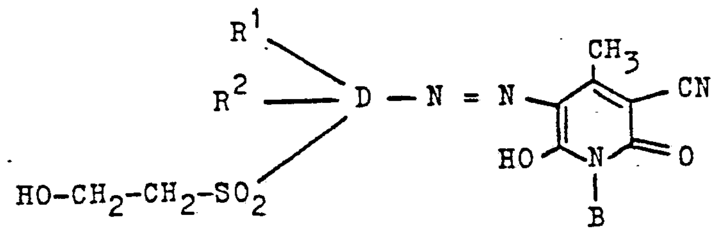

(8)

in welcher $R^1$, $R^2$, D und B die obengenannten Bedeutungen haben, mittels 96 bis 99 %iger Schwefelsäure synthetisieren. Bei dieser Sulfatisierungsreaktion wird die Cyangruppe in der Pyridonkomponente leicht zur Carbamoylgruppe hydrolysiert. Diese Verfahrensweise kann gemäß der in Houben-Weyl, Methoden der organischen Chemie, Band VIII/3 (1952), Seite 662, erfolgen ; hierbei arbeitet man bei einer Reaktionstemperatur zwischen 0 und 80 °C, vorzugsweise zwischen 30 und 60 °C.

In gleicher Weise lassen sich erfindungsgemäße Verbindungen der allgemeinen Formel (1), in welchen Y für eine β-Sulfatoäthyl-Gruppe und B eine durch eine Sulfatogruppe substituierte Alkylgruppe von 1 bis 4 C-Atomen, insbesondere eine β-Sulfatoäthyl-Gruppe steht und R eine Carbamoylgruppe ist, durch Sulfatisierung und gleichzeitiger Hydrolyse der Cyangruppe einer Verbindung der allgemeinen Formel (9)

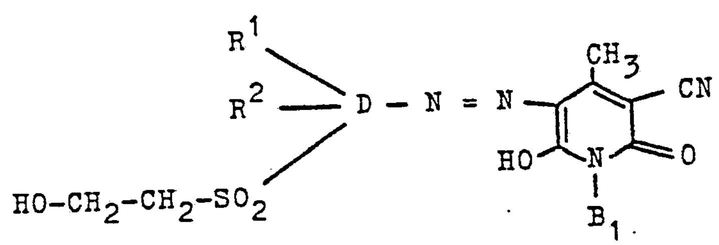

(9)

in welcher $R^1$, $R^2$ und D die obengenannten Bedeutungen haben und $B_1$ eine Hydroxyalkylgruppe, bevorzugt eine β-Hydroxyethyl-Gruppe ist, mittels 96 bis 99 %iger Schwefelsäure bei 0 bis 80 °C, vorzugsweise 30 bis 60 °C, herstellen.

Die als Ausgangsverbindungen dienenden Diazo- und Kupplungskomponenten sind bekannt. Die β-Hydroxyethylsulfonyl-Azoverbindung der allgemeinen Formel (7) läßt sich durch entsprechende Umsetzung des diazotierten Amins entsprechend der allgemeinen Formel (5), in welcher Y jedoch für die β-Hydroxyethyl-Gruppe steht, mit der Kupplungskomponente entsprechend der allgemeinen Formel (6) erhalten. Die Diazotierung der Amine der allgemeinen Formel (5) kann analog den altbekannten Verfahrensweisen, beispielsweise in stark saurem, wäßrig-organischem und vor allem rein wäßrigem Medium (wie bei einem pH-Wert zwischen 0 und 2) mittels salpetriger Säure, erfolgen. Ebenso wird die Umsetzung dieser Diazoniumverbindungen mit den Pyridonverbindungen der allgemeinen Formel (6) nach bekannten Verfahrensweisen, beispielsweise in wäßrig-organischem, vorwiegend in rein wäßrigem Medium, in schwach saurem bis neutralen (wie bei einem pH-Wert zwischen 4 und 7), gegebenenfalls in sehr schwach alkalischem pH-Bereich (wie beispielsweise bis zu einem pH-Wert von 8) ausgeführt werden. Hierbei ist darauf zu achten, daß die faserreaktive Gruppe nicht durch einen zu alkalischen Bereich geschädigt wird.

Aminoverbindungen der allgemeinen Formel (5) sind beispielsweise 1-Amino-4-(β-sulfatoethylsulfonyl)-benzol, 1-Amino-3-(β-sulfatoethylsulfonyl)-benzol, 1-Amino-2-(β-sulfatoethylsulfonyl)-benzol, 1-Amino-2-methoxy-5-(β-sulfatoethylsulfonyl)-benzol, 1-Amino-2-hydroxy-5-(β-sulfatoethylsulfonyl)-benzol, 1-Amino-2-hydroxy-4-(β-sulfatoethylsulfonyl)-benzol, 1-Amino-2-methyl-4-(β-sulfatoethylsulfonyl)-benzol, 1-Amino-2-methoxy-5-methyl-4-(β-sulfatoethylsulfonyl)-benzol, 1-Amino-2,5-dimethoxy-4-(β-sulfatoethylsulfonyl)-benzol, 1-Amino-2-methyl-5-methoxy-4-(β-sulfatoethylsulfonyl)-benzol, 2-Chlor-1-amino-5-(β-sulfatoethylsulfonyl)-benzol, 2-Sulfo-1-amino-5-(β-sulfatoethylsulfonyl)-benzol, 2-Carboxy-1-amino-5-(β-sulfatoethylsulfonyl)-benzol, 1-Amino-4-chlor-5-(β-sulfatoethylsulfonyl)-benzol, 1-Amino-2-brom-4-(β-sulfatoethylsulfonyl)-benzol, 1-Amino-4-[2'-nitro-4'-(β-sulfatoethylsulfonyl)-phenylamino]-benzol, 1-Amino-4-[4'-nitro-2'-(β-sulfatoethylsulfonyl)-phenylamino]-benzol, 1-Amino-4-[3'-(β-sulfatoethyl-sulfonyl)-benzoylamino]-benzol, 2-Amino-1-sulfo-6-(β-sulfatoethylsulfonyl)-naphthalin, 2-Amino-6-sulfo-8-(β-sulfatoethylsulfonyl)-naphthalin, 1-Amino-6-sulfo-4-(β-sulfatoethylsulfonyl)-naphthalin, 1-Amino-7-sulfo-5-(β-sulfatoethylsulfonyl)-naphthalin, 1-Amino-4-sulfo-6-(β-sulfatoethylsulfonyl)-naphthalin, 1-Amino-4-sulfo-7-(β-sulfatoethylsulfonyl)-naphthalin, 2-Amino-1-sulfo-5-(β-sulfatoethylsulfonyl)-naphthalin, 2-Amino-1,7-disulfo-5-(β-sulfatoethylsulfonyl)-naphthalin, 2-Amino-8-sulfo-6-(β-sulfatoethylsulfonyl)-naphthalin, 1-Amino-4-(β-sulfato-ethylsulfonyl)-naphthalin, 1-Amino-5-(β-sulfatoethylsulfonyl)-naphthalin, 1-Amino-6-(β-sulfatoethylsulfonyl)-naphthalin, 1-Ami-

no-7-(β-sulfatoethylsulfonyl)-naphthalin, 1-Amino-3,6-di-(β-sulfatoethylsulfonyl)-naphthalin, 1-Amino-2-ethoxy-6-(β-sulfatoethylsulfonyl)-naphthalin, 2-Amino-5-(β-sulfatoethylsulfonyl)-naphthalin, 2-Amino-6-(β-sulfatoethylsulfonyl)-naphthalin, 2-Amino-7-(β-sulfatoethylsulfonyl)-naphthalin, 2-Amino-8-(β-sulfatoethylsulfonyl)-naphthalin, 2-Amino-6,8-di-(β-sulfatoethylsulfonyl)-naphthalin und 2-Amino-4,8-di-(β-sulfatoethylsulfonyl)-naphthalin sowie beispielsweise deren entsprechenden β-Thiosulfatoethylsulfonyl-, β-Phosphatoethylsulfonyl-, β-Chlorethylsulfonyl-, β-Acetoxyethylsulfonyl und Vinylsulfonyl-Derivate und gegebenenfalls β-Hydroxyethylsulfonyl-Derivate.

Pyridonverbindungen entsprechend der allgemeinen Formel (6) sind beispielsweise 1-(β-Sulfatoethyl)-4-methyl-6-hydroxy-2-pyridon, 1-(β-Phosphatoethyl)-3-carbamoyl-4-methyl-6-hydroxy-2-pyridon, 1-Carboxymethyl-4-methyl-6-hydroxy-2-pyridon, 1-(β-Sulfatoethyl)-3-carbamoyl-4-methyl-6-hydroxy-2-pyridon, 1-(β-Carboxyethyl)-4-methyl-6-hydroxy-2-pyridon, 1-(β-Carboxyethyl)-3-carbamoyl-4-methyl-6-hydroxy-2-pyridon, 1-(β-Sulfatoethyl)-3-carbamoyl-4-methyl-6-hydroxy-2-pyridon, 1-(β-Phosphatoethyl)-4-methyl-6-hydroxy-2-pyridon und 1-Carboxymethyl-3-carbamoyl-4-methyl-6-hydroxy-2-pyridon.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern ; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Monoazoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 40 und 80 °C, gegebenenfalls bei Temperaturen bis zu 120 °C unter Druck, und gegebenenfalls in Gegenwart von üblichen Färbereihilfsmitteln. Sehr gute Farbausbeuten erhält man bereits bei Färbetemperaturen von 40 °C.

Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mittels einer die erfindungsgemäße Verbindung und Natriumbicarbonat oder ein anderes säurebindendes Mittel enthaltenden Druckpaste und anschließendes Dämpfen bei 100 bis 103 °C, oder zweiphasig, beispielsweise durch Bedrucken mittels einer die erfindungsgemäße Verbindung enthaltenden neutralen oder schwach sauren Druckpaste und anschließendes Fixieren der erfindungsgemäßen Verbindung entweder durch Hindurchführen des bedruckten Materials durch ein heißes alkali- und elektrolythaltiges Bad oder durch Überklotzen mit einer alkalischen elektrolythaltigen Klotzflotte und

anschließendes Verweilen dieses überklotzten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und Erdalkalimetalle von organischen oder anorganischen Säuren oder Verbindungen, die in der Hitze Alkali freisetzen. Insbesondere sind die Alkalimetallhydroxide und Alkalimetallsalze von schwach bis mittelstarken anorganischen oder organischen Säuren zu nennen, vorzugsweise deren Natrium- und Kaliumverbindungen. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäßen Verbindungen (Farbstoffe) mit den säurebindenden Mitteln, gegebenenfalls unter Wärmeeinwirkung, werden die erfindungsgemäßen Farbstoffe chemisch an die Cellulosefaser gebunden ; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile gut auswaschen lassen.

Die Färbungen auf Polyurethan oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit erfindungsgemäßen Verbindungen der allgemeinen Formel (1) hergestellten Färbungen und Drucke zeichnen sich in der Regel durch klare, grünstichig über rotstichig gelbe bis gelbstichig orange Nuancen und hohe Farbstärken aus. Sie lassen sich insbesondere vorteilhaft mit bekannten blauen faserreaktiven Phthalocyaninfarbstoffen, die wertvolle Eigenschaften besitzen, kombinieren, um in Mischung Färbungen mit grünen Nuancen zu liefern.

Die Färbungen und Drucke besitzen, insbesondere auf Cellulosefasermaterialien, eine sehr gute Lichtechtheit und gute bis sehr gute Naßechtheiten, wie beispielsweise eine gute Chlorwasserechtheit, gute bis sehr gute Waschechtheiten bei 60 bis 95 °C, auch in Gegenwart von Perboraten, saure und alkalische Walk-, Überfärbe- und Schweißechtheiten, Alkali-, Säure-, Wasser- und Seewasserechtheiten, desweiteren eine gute Plissierechtheit, Bügelechtheit und Reibechtheit. Ebenso besitzen sie eine sehr gute Säurelagerbeständigkeit (« acid fading ») beim Lagern von feuchten, noch Essigsäure enthaltendem, gefärbtem Material.

Ebenso von Bedeutung ist die erfindungsgemäße Verwendung der Verbindungen der allgemeinen Formel (1) für das faserreaktive Färben von Wolle. Insbesondere läßt sich auch filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298) ; J. Soc. Dyers and Colourists 1972, 93-99, und 1975, 33-44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100 °C durchgeführt, jedoch können sie auch in geschlossenen Färbeapparaturen bei Temperaturen bis zu 106 °C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch. Sie liefern auf den Fasermaterialien, insbesondere beim reaktiven Färben von Wolle, klare grünstichig über rotstichig gelbe bis gelbstichig orange Färbungen. Bei Anwendung von Färbetemperaturen von 100 bis 106 °C ist eine hohe Baderschöpfung festzustellen.

Bei den mit den erfindungsgemäßen Verbindungen der allgemeinen Formel (1) erhältlichen

Färbungen kann auf eine ansonsten übliche ammoniakalische Nachbehandlung der gefärbten Ware verzichtet werden. Im Vergleich zu konstitutionell ähnlichen bekannten Farbstoffen zeigen sie in überraschender Weise einen sehr guten Farbaufbau, wobei die brillante Nuance in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit der erfindungsgemäßen Verbindung egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemäßen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Naßechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Naßechtheitseigenschaften insbesondere die ausgezeichnete alkalische Schweißechtheit und sehr gute Waschechtheit bei 60 °C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben ; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Beispiel 1

140 Teile 4-(β-Sulfatoethylsulfonyl)-anilin werden in 500 Teile Wasser mit 33 Teilen Natriumcarbonat gelöst. Nach Zugabe von 300 Teilen Eis und 111 Teilen einer 31 %igen wäßrigen Salzsäure wird mittels einer wäßrigen Lösung von 34,5 Teilen Natriumnitrit diazotiert. Nach 1 Stunde Rühren wird überschüssige salpetrige Säure mit Sulfaminsäure zerstört und das Reaktionsgemisch mit einer schwach sauren Lösung von 117 Teilen 1-(2-Sulfoethyl)-4-methyl-6-hydroxy-2-pyridon in 300 Teilen Wasser versetzt ; während dieser Kupplungsreaktion wird der pH-Wert mit Natriumbicarbonat zwischen 5 und 5,5 gehalten.

Die erfindungsgemäße Monoazoverbindung wird aus der wäßrigen Syntheselösung in für wasserlösliche Farbstoffe üblicher Weise isoliert, beispielsweise durch Eindampfen der sehr schwach sauren bis neutralen Lösung, durch Sprühtrocknen oder durch Aussalzen mit einem Elektrolytsalz, wie Kalium- oder Natriumchlorid. Es wird ein gelbes Pulver isoliert, das das Alkalimetallsalz, wie Natrium- oder Kaliumsalz, der Verbindung der Formel

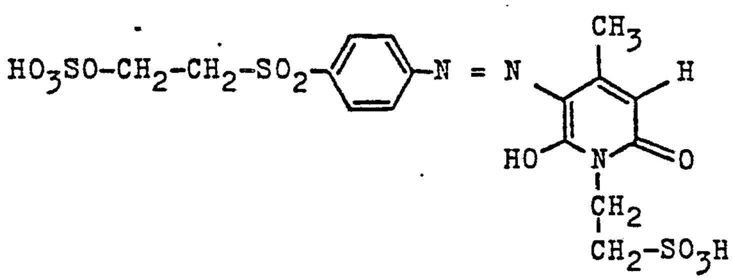

enthält. Diese erfindungsgemäße Azoverbindung zeigt, in Wasser gelöst, im sichtbaren Absorptionsbereich ein Maximum bei 411 nm. Sie besitzt sehr gute Farbstoffeigenschaften und liefert beispielsweise auf Baumwolle nach den in der Technik üblichen Applikations- und Fixiermethoden, insbesondere solchen für faserreaktive Farbstoffe, farbstarke, grünstichig gelbe Färbungen und Drucke von guten Licht- und Naßechtheitseigenschaften, wie bspw. guten Waschechtheiten, guten alkalischen und sauren Walk-, Überfärbe- und Schweißechtheiten sowie guten Alkali- und Säureechtheiten.

Beispiel 2

Man verfährt zur Herstellung einer erfindungsgemäßen Monoazoverbindung gemäß den Verfahrensangaben des Beispieles 1, verwendet jedoch anstelle des 4-(β-Sulfatoethylsulfonyl)-anilins das 2-Methoxy-5-methyl-4-(β-sulfatoethylsulfonyl)-anilin in äquivalenter Menge.

Nach Aufarbeitung mit der Syntheselösung und Isolierung erhält man ein elektrolythaltiges Pulver mit dem Alkalimetallsalz der Verbindung der Formel

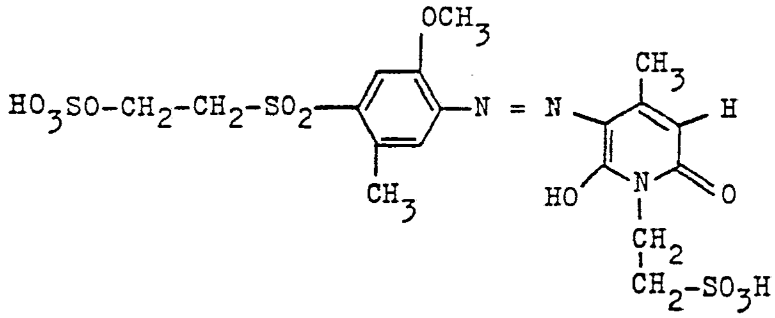

die in wäßriger Lösung bei 432 nm ein Absorptionsmaximum zeigt und bspw. Cellulosefasermaterialien, wie Baumwolle, in echten gelben Tönen färbt.

## Beispiel 3

32,5 Teile 2-Carboxy-5-(β-sulfatoethylsulfonyl)-anilin werden in 280 Teilen Eiswasser eingetragen. Nach Zugabe von 26 Teilen 31 %iger wäßriger Salzsäure wird unter Verwendung einer 5n-Natriumnitritlösung und unter kräftigem Rühren diazotiert. Überschüssige salpetrige Säure wird nach einer Stunde mit Amidosulfonsäure zersetzt ; das Reaktionsgemisch wird mit einer neutralen Lösung von 24 Teilen 1-(2-Carboxyethyl)-3-carbamoyl-4-methyl-6-hydroxy-2-pyridon in 200 Teilen Wasser gekuppelt. Während dieser Kupplungsreaktion wird der pH-Wert mit Natriumbicarbonat zwischen 5 und 5,5 gehalten.

Nach der üblichen Aufarbeitung der Syntheselösung und Isolierung erhält man ein elektrolythaltiges Pulver mit dem Alkalimetallsalz, wie beispielsweise Natriumsalz, der Verbindung der Formel

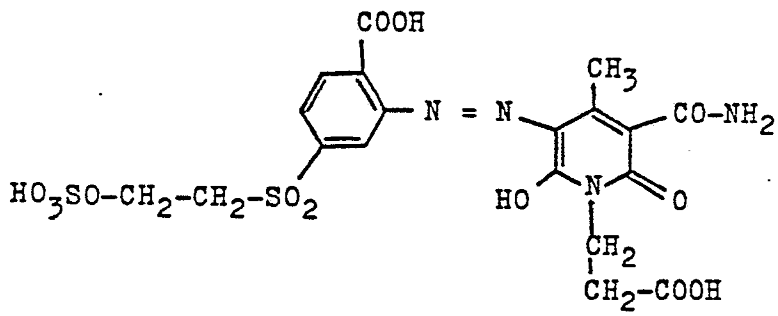

die in wäßriger Lösung im sichtbaren Absorptionsbereich ein Maximum bei 418 nm zeigt. Sie besitzt sehr gute Farbstoffeigenschaften und liefert auf den in der Beschreibung genannten Materialien, wie insbesondere Cellulosefasermaterialien, beispielsweise Baumwolle, nach den in der Technik, insbesondere für faserreaktive Farbstoffe, üblichen Applikations- und Fixiermethoden farbstarke, grünstichig gelbe Färbungen und Drucke von guter Lichtechtheit und von guten Naßechtheitseigenschaften, wie bspw. insbesondere guten Waschechtheiten, guten alkalischen und sauren Walk-, Überfärbe- und Schweißechtheiten sowie einer guten Chlorbadewasserechtheit.

## Beispiel 4

41,1 Teile 6-(β-Sulfatoethylsulfonyl)-1-sulfo-2-naphthylamin wurden in 400 Teilen Eiswasser suspendiert, mit 30 Teilen 31 %iger wäßriger Salzsäure versetzt und mit einer 5n-Natriumnitritlosüng rasch diazotiert. Es wird eine Stunde weitergerührt und überschüssige salpetrige Säure sodann mit Amidosulfonsäure zersetzt. Das Reaktionsgemisch wird mit einer schwach sauren Lösung von 23,3 Teilen 1-(2-Sulfoethyl)-4-methyl-6-hydroxy-2-pyridon in 100 Teilen Wasser versetzt ; während dieser Kupplungsreaktion wird der pH-Wert mit Natriumbicarbonat zwischen 5 und 5,5 gehalten.

Nach der üblichen Aufarbeitung der Syntheselösung und Isolierung erhält man ein elektrolythaltiges Pulver mit dem Alkalimetallsalz, wie beispielsweise Natriumsalz, der Verbindung der Formel

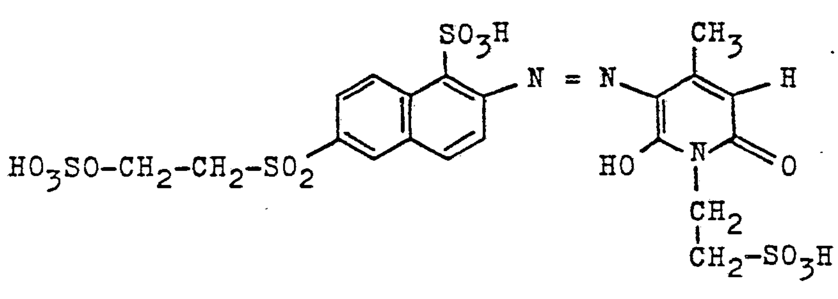

die in wäßriger Lösung im sichtbaren Absorptionsbereich ein Maximum bei 420 nm zeigt. Sie besitzt sehr gute Farbstoffeigenschaften und liefert auf den in der Beschreibung genannten Materialien, wie insbesondere Cellulosefasermaterialien, beispielsweise Baumwolle, nach den in der Technik, insbesondere für faserreaktive Farbstoffe, üblichen Applikations- und Fixiermethoden farbstarke, grünstichig gelbe Färbungen und Drucke von guter Lichtechtheit und von guten Naßechtheitseigenschaften, wie insbesondere guten Alkali-, Wasch-, Walk-, Überfärbe-, Chlorbadewasser- und Schweißechtheiten.

Beispiel 5

100,5 Teile 4-(β-Hydroxyethylsulfonyl)-anilin werden in 500 Teile Wasser mit 300 Teilen einer 31 %igen wäßrigen Salzsäure gelöst. Nach Zugabe von 300 Teilen Eis wird mittels einer wäßrigen Lösung von 34,5 Teilen Natriumnitrit diazotiert und überschüssige salpetrige Säure wird anschließend in üblicher Weise zersetzt. Das Reaktionsgemisch wird mit einer schwach sauren Lösung von 117 Teilen 1-(2-Sulfoethyl)-4-methyl-6-hydroxy-2-pyridon in 300 Teilen Wasser versetzt ; während dieser Kupplungsreaktion wird der pH-Wert mit Natriumbicarbonat zwischen 5 und 5,5 gehalten.

Nach der üblichen Aufarbeitung der Syntheselösung und Isolierung erhält man ein elektrolythaltiges Pulver mit dem Alkalimetallsalz, wie beispielsweise Natriumsalz der Verbindung der Formel

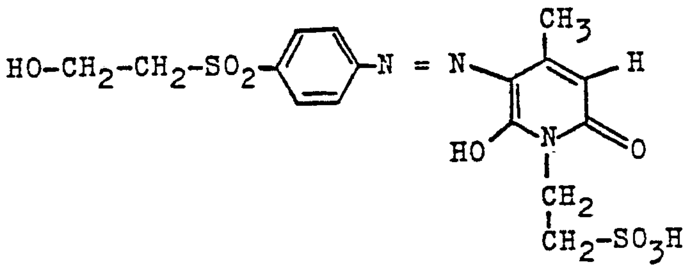

Das trockene und gemahlene gelbe Farbstoffpulver wird in 1 100 Teile konzentrierte Schwefelsäure eingetragen und 6 Stunden bei Raumtemperatur gerührt. Anschließend gießt man die erhaltene Lösung auf ein Gemisch aus Eis und Natriumchlorid, filtriert den ausgefallenen Esterfarbstoff ab und wäscht diesen mit einer wässrigen Natriumchloridlösung. Nach dem Trocknen wird ein salzhaltiges gelbes Farbstoffpulver mit der in Beispiel 1 beschriebenen Verbindung erhalten, die gleich gute färberische Eigenschaften besitzt.

Beispiel 6

Man verfährt zur Herstellung einer erfindungsgemäßen Monoazoverbindung gemäß den Verfahrensangaben des Beispieles 5, verwendet jedoch anstelle des 1-(2-Sulfoethyl)-4-methyl-6-hydroxy-2-pyridons das 1-(2-Carboxyethyl)-3-cyan-4-methyl-6-hydroxy-2-pyridon in äquivalenter Menge. Nach Aufarbeitung der Syntheselösung und Isolierung erhält man ein elektrolythaltiges Pulver mit dem Alkalimetallsalz der Verbindung der Formel

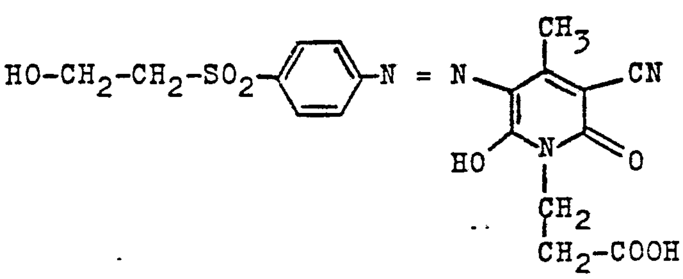

Das trockene und gemahlene dunkelgelbe Pulver wird in 1 100 Teile konzentrierte Schwefelsäure eingetragen und 24 Stunden bei 55 °C gerührt. Anschließend gießt man die erhaltene Lösung auf ein Gemisch aus Eis und Kaliumchlorid, filtriert den ausgefallenen Esterfarbstoff ab und rührt diesen in Wasser wieder an. Mit Natriumbicarbonat wird der pH-Wert dieser Suspension auf 5,0 eingestellt und der Farbstoff erneut mit Kaliumchlorid ausgesalzen und isoliert. Nach dem Trocknen wird ein gelbes Pulver mit der Verbindung der Formel

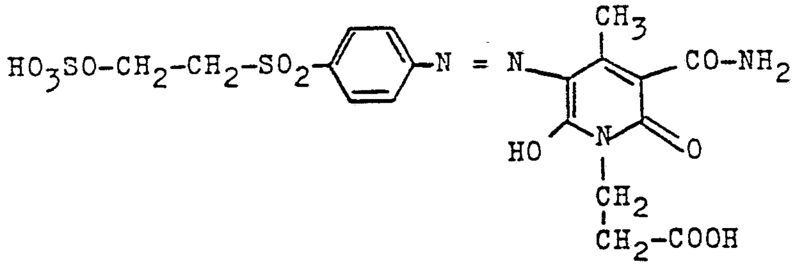

in Form ihres Natrium- und Kaliumsalzes erhalten. Sie zeigt in wäßriger Lösung bei 417 nm ein Absorptionsmaximum und färbt bspw. Cellulosefasermaterialien, wie Baumwolle, in echten grünstichig gelben Tönen.

Beispiel 7

147,5 Teile 1-Methoxy-5-(β-hydroxyethylsulfonyl)-anilin werden gemäß den Verfahrensangaben des Beispieles 5 diazotiert und mit einer schwach sauren Lösung von 97 Teilen 1-(2-Hydroxyethyl)-3-cyan-4-methyl-6-hydroxy-2-pyridon in 350 Teilen Wasser versetzt. Während dieser Kupplungsreaktion wird der pH-Wert mit Natriumbicarbonat zwischen 5 und 5,5 gehalten.

Nach Aufarbeitung der Syntheselösung wird die isolierte elektrolythaltige Azoverbindung getrocknet und gemahlen. Das gelbe Pulver wird in 1 100 Teile konzentrierte Schwefelsäure eingetragen und 24 Stunden bei 55 °C gerührt. Anschließend gießt man die erhaltene Lösung auf ein Gemisch aus Eis und Kaliumchlorid, filtriert den ausgefallenen Esterfarbstoff ab und rührt diesen in Wasser wieder an. Mit Natriumbicarbonat wird der pH-Wert dieser Suspension auf 5,0 eingestellt und der Farbstoff erneut mit Kaliumchlorid ausgesalzen. Nach dem Trocknen wird ein gelbes Pulver isoliert, das die Verbindung der Formel

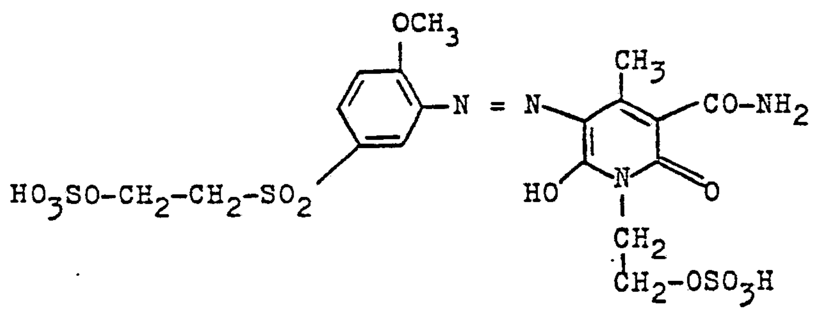

in Form ihres Natrium- und Kaliumsalzes enthält. Sie zeigt in wäßriger Lösung bei 432 nm ein Absorptionsmaximum und färbt bspw. Cellulosefasermaterialien, wie Baumwolle, in echten gelben Tönen.

Beispiele 8 bis 38

In den nachfolgenden Tabellenbeispielen sind weitere erfindungsgemäße Monoazoverbindungen mit Hilfe ihrer Diazo- und Kupplungskomponenten beschrieben. Sie lassen sich in erfindungsgemäßer Weise, bspw. analog den vorhergehenden Beispielen, herstellen und stellen wertvolle Farbstoffe mit faserreaktiven Eigenschaften dar. Sie liefern auf den in der Beschreibung genannten Materialien, wie insbesondere Cellulosefasermaterialien, beispielsweise Baumwolle, farbstarke Färbungen und Drucke mit guten Echtheiten mit dem in dem jeweiligen Tabellenbeispiel für die Färbung auf Baumwolle angegebenen Farbton. Die Absorptionsmaxima ($\lambda_{max}$) wurden in wäßriger Lösung gemessen.

(Siehe Tabelle Seite 12 ff.)

Anwendungsbeispiel 1

20 Teile der erfindungsgemäßen Verbindung (als Natriumsalz) von Beispiel 1 werden zusammen mit 50 Teilen Harnstoff in 300 Teilen Wasser gelöst. Die Lösung wird unterhalb von 40 °C in 400 Teilen einer neutralen, wäßrigen 4 %igen Alginatverdickung eingerührt. Man gibt 10 Teile Natriumcarbonat hinzu und füllt das Ganze mit der 4 %igen wäßrigen Alginatverdickung auf eine Gesamtmenge von 1 000 Teilen auf. Man rührt gut durch und bedruckt mit der so hergestellten Druckpaste ein Baumwollgewebe, das nach dem Trocknen bei 60 °C in einem handelsüblichen Dämpfaggregat 5 Minuten lang mit Sattdampf von 100 bis 103 °C behandelt wird. Der so hergestellte Druck wird anschließend durch Spülen mit kaltem und heißem Wasser, durch Waschen mit einem neutralen Waschmittel und nochmaliges Spülen mit Wasser

| Bsp. | Amin der allgemeinen Formel (5) | Pyridonverbindung der allgemeinen Formel (6) | Farbton auf Baumwolle ($\lambda_{max}$ in nm) |
|---|---|---|---|
| 8 | 4-(ß-Sulfatoethylsulfonyl)-anilin | 1-(2-Sulfoethyl-3-carbamoyl-4-methyl-6-hydroxy-2-pyridon | grünstichig gelb (415) |
| 9 | 4-Vinylsulfonylanilin | dito | grünstichig gelb (415) |
| 10 | 3-(ß-Sulfatoethylsulfonyl)-anilin | dito | grünstichig gelb (412) |
| 11 | 2-Methoxy-5-(ß-sulfatoethylsulfonyl)-anilin | dito | gelb (432) |
| 12 | 2,5-Dimethoxy-4-(ß-sulfatoethylsulfonyl)-anilin | 1-(2-Sulfoethyl-3-carbamoyl-4-methyl-6-hydroxy-2-pyridon | rotstichig gelb (445) |
| 13 | 6-Sulfo-8-(ß-Sulfatoethylsulfonyl)-2-aminonaphthalin | dito | gelb (437) |
| 14 | 3-(ß-Sulfatoethylsulfonyl)-anilin | 1-(2-Sulfoethyl)-4-methyl-6-hydroxy-2-pyridon | grünstichig gelb (411) |
| 15 | 3-(ß-Thiosulfatoethylsulfonyl)-anilin | dito | grünstichig gelb (410) |
| 16 | 3-(ß-Chlorethylsulfonyl)-anilin | dito | grünstichig gelb (411) |
| 17 | 3-Vinylsulfonylanilin | dito | grünstichig gelb (412) |
| 18 | 3-(ß-Acetyloxyethylsulfonyl)-anilin | dito | grünstichig gelb (412) |
| 19 | 3-(ß-Phosphatoethylsulfonyl)-anilin | dito | grünstichig gelb (411) |
| 20 | 2-Carboxy-5-(ß-sulfatoethylsulfonyl)-anilin | 1-(2-Sulfoethyl)-4-methyl-6-hydroxy-2-pyridon | grünstichig gelb (413) |
| 21 | 2-Sulfo-5-(ß-sulfatoethylsulfonyl)-anilin | dito | grünstichig gelb (414) |

(Fortsetzung)

| Bsp. | Amin der allgemeinen Formel (5) | Pyridonverbindung der allgemeinen Formel (6) | Farbton auf Baumwolle ($\lambda_{max}$ in nm) |
|---|---|---|---|
| 22 | 6-Sulfo-8-(ß-sulfatoethylsulfonyl)-2-aminonaphthalin | dito | gelb (433) |
| 23 | 3-(ß-Sulfatoethylsulfonyl)-anilin | 1-(2-Sulfatoethyl)-3-carbamoyl-6-hydroxy-4-methyl-2-pyridon | grünstichig gelb (414) |
| 24 | dito | 1-(2-Phosphatoethyl)-4-methyl-6-hydroxy-2-pyridon | grünstichig gelb (410) |
| 25 | dito | 1-Carboxymethyl-3-carbamoyl-6-hydroxy-4-methyl-2-pyridon | grünstichig gelb (415) |
| 26 | 2,5-Dimethoxy-4-(ß-sulfatoethylsulfonyl)-anilin | dito | rotstichig gelb (444) |
| 27 | 2-Brom-4-(ß-sulfatoethylsulfonyl)-anilin | dito | gelb (428) |
| 28 | 1-Sulfo-6-(ß-sulfatoethylsulfonyl)-2-aminonaphthalin | 1-Carboxymethyl-3-carbamoyl-6-hydroxy-4-methyl-2-pyridon | grünstichig gelb (427) |
| 29 | dito | 1-Carboxymethyl-4-methyl-6-hydroxy 2-pyridon | grünstichig gelb (421) |
| 30 | dito | 1-(2-Carboxyethyl)-4-methyl-6-hydroxy-2-pyridon | grünstichig gelb (421) |
| 31 | dito | 1-(2-Carboxyethyl)-3-carbamoyl-4-methyl-6-hydroxy-2-pyridon | grünstichig gelb (427) |
| 32 | 2-Methoxy-5-(ß-sulfatoethylsulfonyl)-anilin | dito | gelb (432) |

(Fortsetzung)

| Bsp. | Amin der allgemeinen Formel (5) | Pyridonverbindung der allgemeinen Formel (6) | Farbton auf Baumwolle ($\lambda_{max}$ in nm) |
|---|---|---|---|
| 33 | 2-Sulfo-5-(ß-sulfatoethylsulfonyl)-anilin | dito | grünstichig gelb (419) |
| 34 | 3-(ß-Sulfatoethylsulfonyl)-anilin | 1-(2-Carboxyethyl)-4-methyl-6-hydroxy-2-pyridon | grünstichig gelb (412) |
| 35 | 2-Methoxy-5-methyl-4-(ß-sulfatoethylsulfonyl)-anilin | dito | gelb (432) |
| 36 | 2-Brom-4-(ß-sulfatoethylsulfonyl)-anilin | 1-Carboxymethyl-4-methyl-6-hydroxy-2-pyridon | grünstichig gelb (423) |
| 37 | 4-(ß-Sulfatoethylsulfonyl)-anilin | dito | grünstichig gelb (411) |
| 38 | 1-Amino-4-[3'-(ß-sulfatoethylsulfonyl)-benzoylamino]-benzol | 1-(2-Sulfoethyl)-4-methyl-6-hydroxy-2-pyridon | grünstichig gelb (421) |
| 39 | 1-Amino-4-[2'-nitro-4'-(ß-sulfatoethylsulfonyl)-phenylamino]-benzol | 1-(2-Sulfoethyl)-3-carbamoyl-4-methyl-6-hydroxy-2-pyridon | gelb (434) |
| 40 | 1-Sulfo-6-(ß-sulfatoethylsulfonyl)-2-aminonaphthalin | 1-(2-Sulfatoethyl)-3-carbamoyl-4-methyl-6-hydroxy-2-pyridon | grünstichig gelb (426) |
| 41 | 1-Sulfo-6-(ß-sulfatoethylsulfonyl)-2-aminonaphthalin | 1-(2-Phosphatoethyl)-4-methyl-6-hydroxy-2-pyridon | grünstichig gelb (421) |
| 42 | 1-Sulfo-6-vinylsulfonyl-2-aminonaphthalin | 1-(2-Sulfoethyl)-4-methyl-6-hydroxy-2-pyridon | grünstichig gelb (422) |

fertiggestellt. Nach dem Trocknen der Ware erhält man einen farbstarken grünstichig gelben Druck von sehr guter Lichtechtheit und von sehr guten Naßechtheitseigenschaften.

Anwendungsbeispiel 2

Ein Gewebe aus mercerisierter Baumwolle wird mit einer wäßrigen Färbeflotte von 20 °C bei einer Flottenaufnahme von 80 %, bezogen auf das Warengewicht, geklotzt, die im Liter 20 g Natriumsalz der erfindungsgemäßen Azoverbindung von Beispiel 1 sowie 18 g einer 33 %igen wässrigen Natronlauge enthält. Das geklotzte Gewebe wird auf eine Docke gewickelt, in eine Folie eingeschlagen und acht Stunden bei Raumtemperatur liegengelassen. Anschließend wird es durch Spülen mit kaltem Wasser, durch Behandeln mit einem wenig Essigsäure enthaltenden wäßrigen Bad und durch nochmaliges Spülen in kaltem und heißem Wasser fertiggestellt. Nach dem Trocknen erhält man eine farbstarke grünstichig gelbe Färbung von sehr guter Lichtechtheit und von sehr guten Naßechtheiten.

Anwendungsbeispiel 3

100 Teile eines Gewebes aus mercerisierter Baumwolle werden 10 Minuten lang bei 60 °C in 3 000 Volumenteilen eines wäßrigen Färbebades behandelt, das 5 Teile des Natriumsalzes der erfindungsgemäßen Verbindung von Beispiel 1 sowie 150 Teile wasserfreies Natriumsulfat enthält. Nach dieser 10-minütigen Behandlung werden 15 Teile wasserfreies Natriumcarbonat und 4 Teile einer 33 %igen wässrigen Natronlauge zugesetzt. Die Färbung wird 60 Minuten bei 60 °C weitergeführt. Anschließend wird das gefärbte Gewebe in üblicher Weise, wie beispielsweise im Anwendungsbeispiel 2, fertig gestellt. Man erhält eine farbstarke, grünstichig gelbe Färbung von sehr guter Lichtechtheit und von sehr guten Naßechtheiten.

Anwendungsbeispiel 4

100 Teile eines Wollgewebes werden in ein 40 °C warmes wäßriges Färbebad eingebracht, das aus 3 000 Teilen Wasser, 2 Teilen des Natriumsalzes der im Beispiel 1 beschriebenen erfindungsgemäßen Verbindung, 1,5 Teilen eines Anlagerungsproduktes von 12 Mol Ethylenoxid an 1 Mol Stearylamin, 2 Teilen Ammoniumacetat und 2 Teilen 60 %iger wäßriger Essigsäure besteht. Die Färbetemperatur wird innerhalb von 30 Minuten auf Kochtemperatur erhöht und die Färbung anschließend 90 Minuten lang bei 100 °C weitergeführt. Nach dem üblichen Auswaschen und Fertigstellen der erhaltenen Wollfärbung zeigt dieses Wollgewebe einen farbstarken, grünstichig gelben Farbton von sehr guter Lichtechtheit und von sehr guten Naßechtheiten.

Anwendungsbeispiel 5

Man verfährt in der im Anwendungsbeispiel 4 angegebenen Färbeweise, ersetzt jedoch das Wollgewebe durch 100 Teile eines Gewebes aus einer ε-Polycaprolactam-Faser. Man erhält ebenfalls eine farbstarke, grünstichig gelbe Färbung von guten Gebrauchsechtheiten.

Gemäß den obigen Anwendungsbeispielen lassen sich auch die anderen, hier in den Ausführungsbeispielen und Tabellenbeispielen beschriebenen erfindungsgemäßen Monoazoverbindungen in die Färbe- und Druckverfahren einsetzen. In analoger Weise erhält man mit diesen Farbstoffen ebenfalls sehr farbstarke Färbungen und Drucke von guten Licht- und Naßechtheitseigenschaften in den Farbtönen, die für das jeweilige Ausführungs- oder Tabellenbeispiel angegeben sind.

**Patentansprüche**

1. Eine wasserlösliche Monoazoverbindung entsprechend der allgemeinen Formel (1)

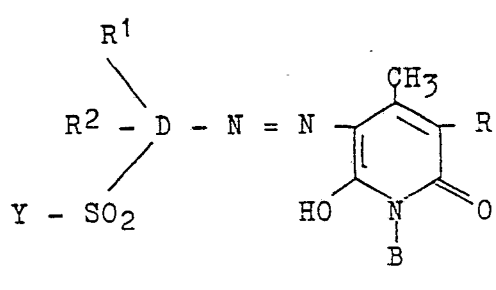

(1)

in welcher bedeuten :

D ist ein Benzolring oder ein Naphthalinring oder ein Rest der Formel (2) oder (3)

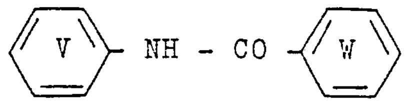

(2)

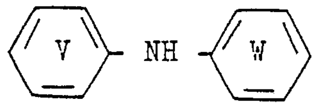

(3)

$R^1$ ist ein Wasserstoffatom, eine Alkylgruppe von 1 bis 4 C-Atomen, eine Alkoxygruppe von 1 bis 4 C-Atomen, eine Hydroxy- oder Nitrogruppe oder ein Halogenatom, falls D für den Benzolring steht, und

$R^2$ ist ein Wasserstoffatom, eine Alkylgruppe von 1 bis 4 C-Atomen, eine Alkoxygruppe von 1 bis 4 C-Atomen, ein Halogenatom, eine Carboxygruppe der Formel —COOM oder eine Sulfogruppe der Formel $—SO_3M$, falls D für den Benzolring steht, oder

$R^1$ ist ein Wasserstoffatom, eine Alkylgruppe von 1 bis 4 C-Atomen, eine Alkoxygruppe von 1 bis 4 C-Atomen, eine Carboxygruppe der Formel —COOM, ein Halogenatom, eine Sulfogruppe der Formel $—SO_3M$ oder eine Gruppe der Formel $—SO_2—Y$ (mit Y der nachstehend angegebenen Bedeutung), falls D für einen Naphthalinring steht, und

$R^2$ ist ein Wasserstoffatom oder eine Sulfogruppe der Formel $—SO_3M$, falls D ein Naphthalinring ist, oder

$R^1$ ist, falls D ein Rest der Formel (2) ist, ein Wasserstoffatom, eine Nitrogruppe, ein Chloratom oder eine Alkoxygruppe von 1 bis 4 C-Atomen, wobei $R^1$ an den Benzolkern V gebunden ist, und

$R^2$ ist, falls D ein Rest der Formel (2) ist, ein Chloratom, eine Sulfogruppe der Formel $—SO_3M$ oder eine Nitrogruppe oder bevorzugt ein Wasserstoffatom, wobei $R^2$ an den Benzolkern W gebunden ist, oder

$R^1$ ist, falls D ein Rest der Formel (3) ist, ein Wasserstoffatom, eine Nitrogruppe oder eine Sulfogruppe der Formel $—SO_3M$, wobei $R^1$ an den Benzolkern V gebunden ist, und

$R^2$ ist, falls D ein Rest der Formel (3) ist, ein Chloratom oder eine Sulfogruppe der Formel $—SO_3M$ oder bevorzugt ein Wasserstoffatom, wobei $R^2$ an den Benzolkern W gebunden ist ;

die Gruppe $—SO_2—Y$ ist in den Formeln (2) und (3) and V oder W, bevorzugt an V, gebunden ;

Y ist die Vinylgruppe oder eine Ethylgruppe, die in β-Stellung einen als Anion alkalisch eliminierbaren Substituenten gebunden enthält ;

R ist ein Wasserstoffatom oder die Carbamoylgruppe ;

B ist eine Alkylgruppe von 1 bis 4 C-Atomen, die durch eine Sulfatogruppe der Formel $—OSO_3M$, eine Phosphatgruppe der Formel $—OPO_3M_2$, eine Carboxygruppe der Formel —COOM oder eine Sulfogruppe der Formel $—SO_3M$ substituiert ist ;

M ist ein Wasserstoffatom oder das Äquivalent eines ein-, zwei- oder dreiwertigen Metalls, insbesondere eines Alkali- oder Erdalkalimetalls ;

die Formelglieder B, $R^1$, $R^2$ und R können zueinander gleiche oder voneinander verschiedene Bedeutungen besitzen.

2. Verbindung nach Anspruch 1, dadurch gekennzeichnet, daß D ein Benzolring ist, $R^1$ für ein Wasserstoffatom, eine Alkylgruppe von 1 bis 4 C-Atomen, eine Alkoxygruppe von 1 bis 4 C-Atomen oder ein Chloratom steht und $R^2$ ein Wasserstoffatom oder eine Alkoxygruppe von 1 bis 4 C-Atomen, eine Carboxygruppe oder eine Sulfogruppe ist.

3. Verbindung nach Anspruch 1 der allgemeinen Formel

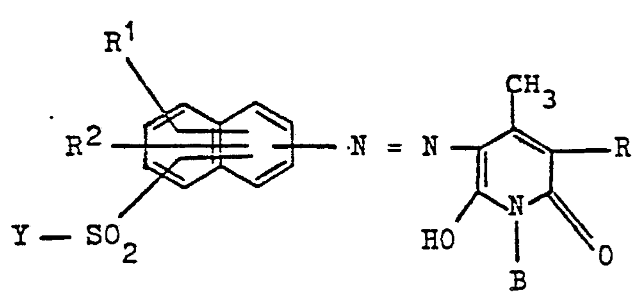

in welcher $R^1$ ein Wasserstoffatom oder eine Sulfogruppe ist, $R^2$ ein Wasserstoffatom oder eine Sulfogruppe bedeutet und B, R und Y die in Anspruch 1 genannten Bedeutungen besitzen.

4. Verbindung nach Anspruch 1 der allgemeinen Formel

(Siehe Formel Seite 17 f.)

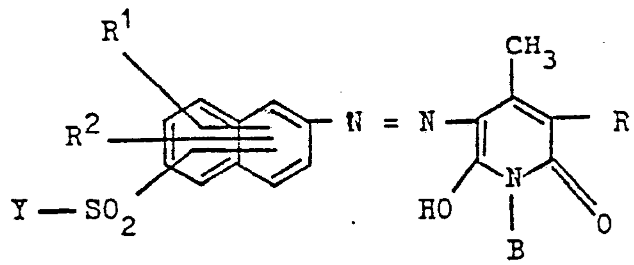

in welcher $R^1$ ein Wasserstoffatom oder eine Sulfogruppe ist, $R^2$ ein Wasserstoffatom oder eine Sulfogruppe bedeutet und B, R und Y die in Anspruch 1 genannten Bedeutungen besitzen.

5. Verbindung nach Anspruch 1 der allgemeinen Formel

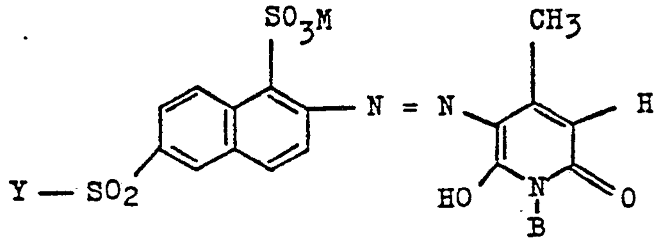

(4a)

in welcher B, M und Y die in Anspruch 1 genannten Bedeutungen haben.

6. Verbindung nach Anspruch 1 der allgemeinen Formel

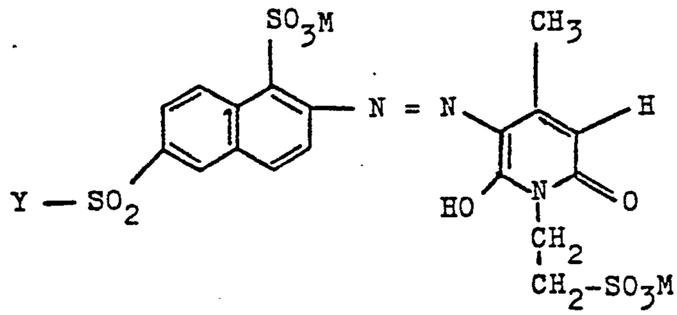

(4b)

in welcher M und Y die in Anspruch 1 genannten Bedeutungen haben.

7. Verbindung nach Anspruch 1 der allgemeinen Formel

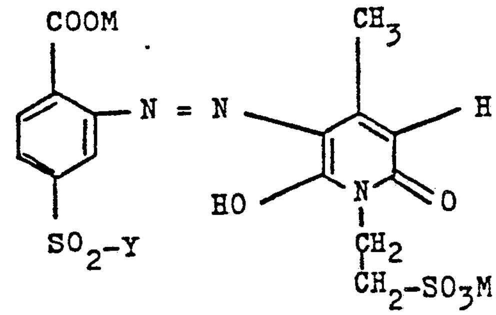

(4c)

in welcher M und Y die in Anspruch 1 genannten Bedeutungen haben.

8. Verbindung nach einem der Ansprüche 1 bis 5, dadurch gekennzeichnet, daß B eine Alkylgruppe von 1 bis 3 C-Atomen ist, die durch eine Sulfogruppe oder Carboxygruppe substituiert ist.

9. Verbindung nach einem der Ansprüche 1 bis 4, dadurch gekennzeichnet, daß B die β-Sulfoethyl-Gruppe ist.

10. Verbindung nach einem der Ansprüche 1 bis 4 oder 8 oder 9, dadurch gekennzeichnet, daß R ein Wasserstoffatom bedeutet.

11. Verbindung nach einem der Ansprüche 1 bis 10, dadurch gekennzeichnet, daß Y für die Vinylgruppe oder eine β-Thiosulfatoethyl-, β-Phosphatoethyl-, β-Chlorethyl-, β-($C_2$-$C_5$-Alkanoyloxy)-ethyl-oder β-Sulfatoethyl-Gruppe steht.

12. Verbindung nach einem der Ansprüche 1 bis 10, dadurch gekennzeichnet, daß Y die Vinylgruppe oder eine β-Sulfatoethyl-Gruppe ist.

13. Verbindung nach einem der Ansprüche 1 bis 12, dadurch gekennzeichnet, daß M für ein Wasserstoffatom oder ein Alkalimetall steht.

14. Verfahren zur Herstellung der in Anspruch 1 genannten und definierten Verbindungen der

allgemeinen Formel (1), dadurch gekennzeichnet, daß man eine Diazoniumverbindung eines Amins der allgemeinen Formel (5)

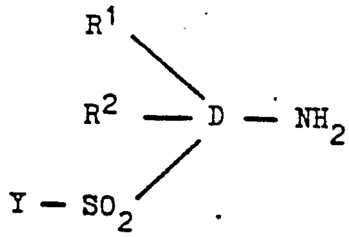

(5)

in welcher $R^1$, $R^2$ und Y die in Anspruch 1 genannten Bedeutungen haben, mit einer Pyridonverbindung der allgemeinen Formel (6)

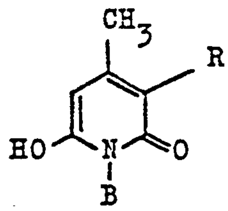

(6)

in welcher R und B die in Anspruch 1 genannten Bedeutungen haben, kuppelt oder daß man eine Azoverbindung der allgemeinen Formel (7)

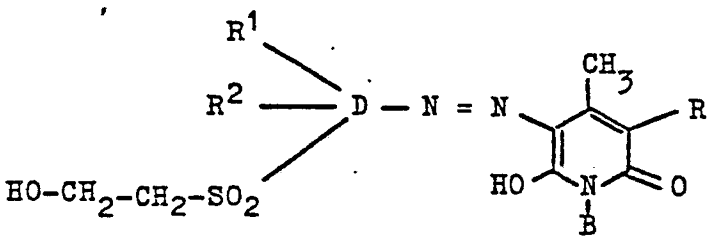

(7)

in welcher $R^1$, $R^2$, R, B und D die in Anspruch 1 genannten Bedeutungen besitzen, mittels eines für die Endverbindung der allgemeinen Formel (1) entsprechenden Veresterungs- oder Acylierungsmittels in eine Verbindung entsprechend der allgemeinen Formel (1) überführt, in welcher Y für eine Ethylgruppe steht, die in β-Stellung durch eine Estergruppe, vorzugsweise durch eine Sulfatogruppe, substituiert ist.

15. Verfahren zur Herstellung der in Anspruch 1 genannten und definierten Verbindungen der allgemeinen Formel (1), in welchen jedoch R die Carbamoylgruppe ist und Y eine β-Sulfatoethyl-Gruppe bedeutet, dadurch gekennzeichnet, daß man eine Verbindung der allgemeinen Formel

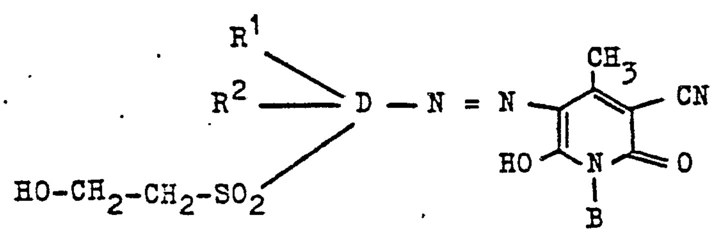

(8)

in welcher $R^1$, $R^2$, B und D die in Anspruch 1 genannten Bedeutungen haben, mit 96-99 %iger Schwefelsäure bei einer Temperatur zwischen 0 und 80 °C umsetzt.

16. Verfahren zur Herstellung einer Verbindung der in Anspruch 1 genannten und definierten allgemeinen Formel (1), in welcher jedoch Y für eine β-Sulfatoethylgruppe steht, B eine durch eine Sulfatogruppe substituierte Alkylgruppe von 1 bis 4 C-Atomen ist und R eine Carbamoylgruppe bedeutet, dadurch gekennzeichnet, daß man eine Verbindung der allgemeinen Formel

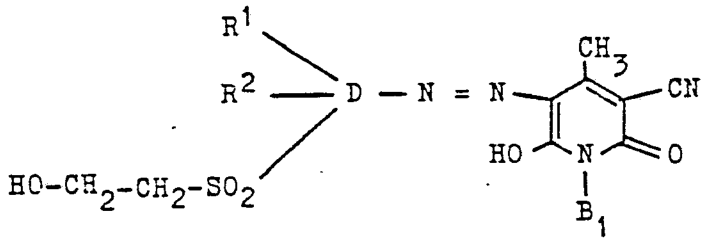

(9)

in welcher $R^1$, $R^2$ und D die in Anspruch 1 genannten Bedeutungen haben und $B_1$ eine Hydroxyalkylgruppe ist, mittels 96-99 %iger Schwefelsäure bei einer Temperatur zwischen 0 bis 80 °C umsetzt.

17. Verwendung der in Anspruch 1 genannten und definierten Verbindungen der allgemeinen Formel (1) als Farbstoffe, insbesondere zum Färben und Bedrucken von hydroxy- und/oder carbonamidgruppenhaltigem Material, insbesondere Fasermaterial.

**Claims**

1. A water-soluble monoazo compound of the general formula (1)

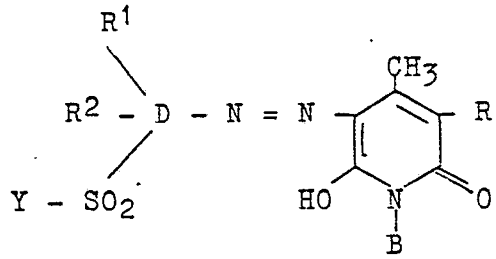

(1)

in which :

D is a benzene ring or a naphthalene ring or a radical of the formula (2) or (3)

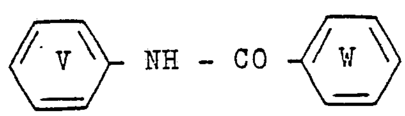

(2)

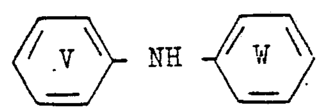

(3)

$R^1$ is a hydrogen atom, an alkyl group of 1 to 4 carbon atoms, an alkoxy group of 1 to 4 carbon atoms, a hydroxyl or nitro group or a halogen atom, if D stands for a benzene ring, and

$R^2$ is a hydrogen atom, an alkyl group of 1 to 4 carbon atoms, an alkoxy group of 1 to 4 carbon atoms, a halogen atom, a carboxyl group of the formula —COOM or a sulfo group of the formula $—SO_3M$, if D stands for a benzene ring, or

$R^1$ is a hydrogen atom, an alkyl group of 1 to 4 carbon atoms, an alkoxy group of 1 to 4 carbon atoms, a carboxyl group of the formula —COOM, a halogen atom, a sulfo group of the formula $—SO_3M$ or a group of the formula $—SO_2—Y$ (where Y has the meaning mentioned hereinafter), if D stands for a naphthalene ring, and

$R^2$ is a hydrogen atom or a sulfo group of the formula $—SO_3M$, if D is a naphthalene ring, or

$R^1$ is, if D is a radical of the formula (2), a hydrogen atom, a nitro group, a chlorine atom or an alkoxy group of 1 to 4 carbon atoms, $R^1$ being bonded to the benzene nucleus V, and

$R^2$ is, if D is a radical of the formula (2), a chlorine atom, a sulfo group of the formula $—SO_3M$ or a nitro group or preferably a hydrogen atom, $R^2$ being bonded to the benzene nucleus W, or

$R^1$ is, if D is a radical of the formula (3), a hydrogen atom, a nitro group or a sulfo group of the formula $—SO_3M$, $R^1$ being bonded to the benzene nucleus V, and

$R^2$ is, if D is a radical of the formula (3), a chlorine atom or a sulfo group of the formula $—SO_3M$ or preferably a hydrogen atom, $R^2$ being bonded to the benzene nucleus W ;

the group $—SO_2—Y$ in the formulae (2) and (3) is bonded to V or W, preferably to V ;

Y is a vinyl group or an ethyl group which contains bonded in the β-position a substituent which is eliminable as an anion under alkaline conditions ;

R is a hydrogen atom or a carbamoyl group ;

B is an alkyl group of 1 to 4 carbon atoms which is substituted by a sulfato group of the formula $—OSO_3M$, a phosphato group of the formula $—OPO_3M_2$, a carboxyl group of the formula —COOM or a sulfo group of the formula $—SO_3M$ ;

M is a hydrogen atom or the equivalent of a monovalent, divalent or trivalent metal, in particular of an alkali metal or alkaline earth metal ; the moieties B, $R^1$, $R^2$ and R can have meanings which are identical to or different from one another.

2. The compound as claimed in claim 1, wherein D is a benzene ring, $R^1$ stands for a hydrogen atom, an alkyl group of 1 to 4 carbon atoms, an alkoxy group of 1 to 4 carbon atoms or a chlorine atom, and $R^2$ is a hydrogen atom or an alkoxy group of 1 to 4 carbon atoms, a carboxyl group or a sulfo group.

3. A compound as claimed in claim 1 of the general formula

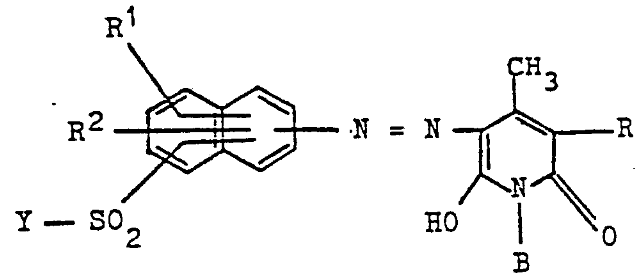

in which $R^1$ is a hydrogen atom or a sulfo group, $R^2$ denotes a hydrogen atom or a sulfo group, and B, R and Y have the meanings mentioned in claim 1.

4. The compound as claimed in claim 1 of the general formula

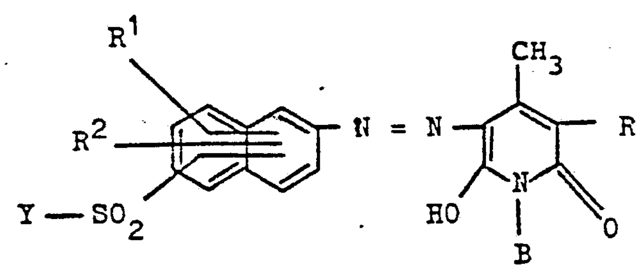

in which $R^1$ is a hydrogen atom or a sulfo group, $R^2$ denotes a hydrogen atom or a sulfo group, and B, R and Y have the meanings mentioned in claim 1.

5. The compound as claimed in claim 1 of the general formula

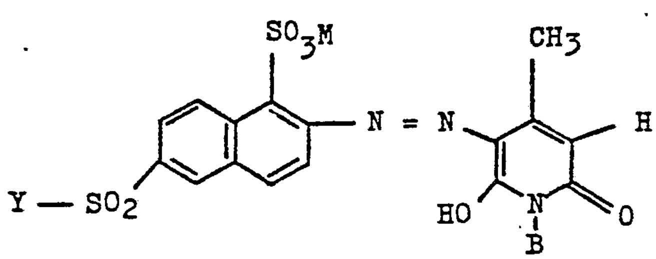

(4a)

in which B, M and Y have the meanings mentioned in claim 1.

6. The compound as claimed in claim 1 of the general formula

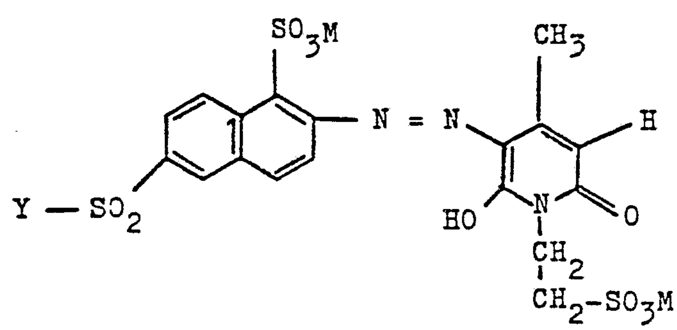

(4b)

in which M and Y have the meanings mentioned in claim 1.

7. The compound as claimed in claim 1 of the general formula

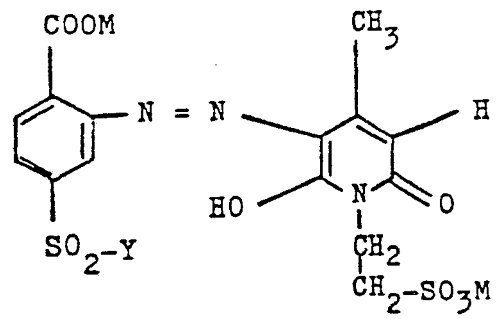

(4c)

in which M and Y have the meanings mentioned in claim 1.

8. The compound as claimed in any one of claims 1 to 5, wherein B is an alkyl group of 1 to 3 carbon atoms which is substituted by a sulfo group or a carboxyl group.

9. The compound as claimed in any one of claims 1 to 4, wherein B is a β-sulfoethyl group.

10. The compound as claimed in any one of claims 1 to 4 or 8 or 9, wherein R denotes a hydrogen atom.

11. The compound as claimed in any one of claims 1 to 10, wherein Y stands for a vinyl group or a β-thiosulfatoethyl, β-phosphatoethyl, β-chloroethyl, β-($C_2$-$C_5$-alkanoyloxy)-ethyl or β-sulfatoethyl group.

12. The compound as claimed in any one of claims 1 to 10, wherein Y is a vinyl group or a β-sulfatoethyl group.

13. The compound as claimed in any one of claims 1 to 12, wherein M stands for a hydrogen atom or an alkali metal.

14. A process for preparing the compounds mentioned and defined in claim 1 of the general formula (1) which comprises coupling a diazonium compound of an amine of the general formula (5)

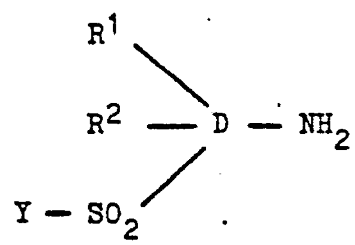

(5)

in which $R^1$, $R^2$ and Y have the meanings mentioned in claim 1, with a pyridone compound of the general formula (6)

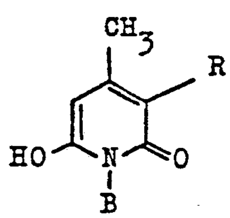

(6)

in which R and B have the meanings mentioned in claim 1, or converting an azo compound of the general formula (7)

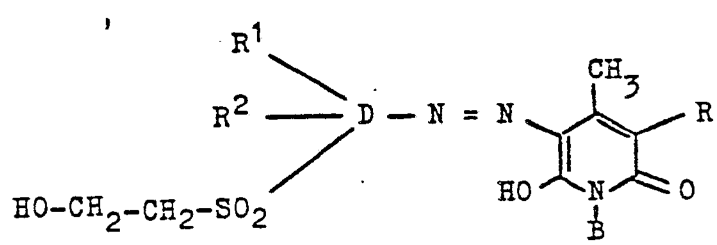

(7)

in which $R^1$, $R^2$, R, B and D have the meanings mentioned in claim 1, by means of an esterification of acylation agent appropriate for the end compound of the general formula (1) into a compound of the general formula (1) in which Y stands for an ethyl group which is substituted in the β-position by an ester group, preferably by a sulfato group.

15. A process for preparing the compounds mentioned and defined in claim 1 of the general formula (1) in which, however, R is a carbamoyl group and Y denotes a β-sulfatoethyl group, which comprises reacting a compound of the general formula

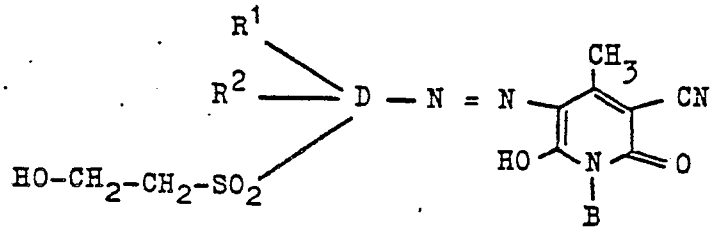

(8)

in which $R^1$, $R^2$, B and D have the meanings mentioned in claim 1, at a temperature between 0 and 80 °C with 96-99 % strength sulfuric acid.

16. A process for preparing a compound of the general formula (1) mentioned and defined in claim 1 and in which, however, Y stands for a β-sulfatoethyl group, B is a sulfato-substituted alkyl group of 1 to 4 carbon atoms and R denotes a carbamoyl group, which comprises reacting a compound of the general formula

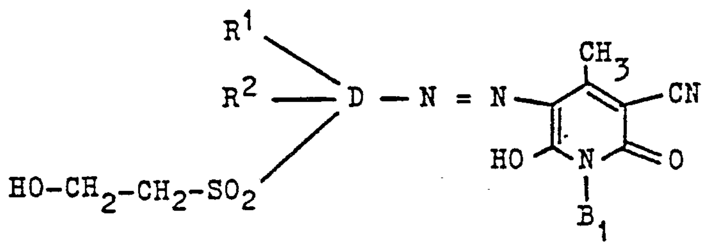

(9)

in which $R^1$, $R^2$, and D have the meanings mentioned in claim 1 and $B_1$ is a hydroxyalkyl group, at a temperature between 0 and 80 °C by means of 96-99 % strength sulfuric acid.

17. Use of the compound mentioned and defined in claim 1 of the general formula (1), as a dyestuff, in particular for dyeing and printing hydroxyl- and/or carboxamido-containing material, in particular fiber material.

**Revendications**

1. Composé mono-azoïque hydrosoluble qui répond à la formule générale 1 :

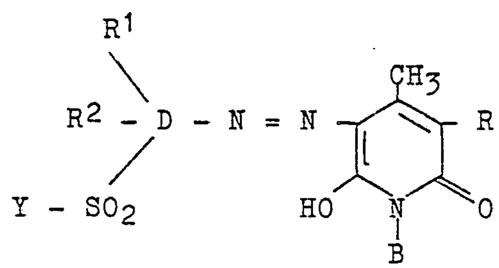

(1)

dans laquelle :

D représente un noyau benzénique, un noyau naphtalénique ou un radical répondant à l'une des formules 2 et 3 :

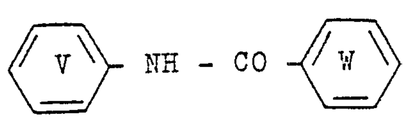

(2)

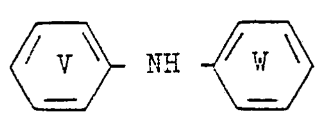

(3)

$R^1$ représente un atome d'hydrogène, un alkyle en $C_1$-$C_4$, un alcoxy en $C_1$-$C_4$, un hydroxy, un nitro ou un atome d'halogène, dans le cas où D représente un noyau benzénique, et

$R^2$ représente un atome d'hydrogène, un alkyle en $C_1$-$C_4$, un alcoxy en $C_1$-$C_4$, un atome d'halogène, un carboxy de formule —COOM ou un sulfo de formule —$SO_3M$, dans le cas où D représente un noyau benzénique, ou

$R^1$ représente un atome d'hydrogène, un alkyle en $C_1$-$C_4$, un alcoxy en $C_1$-$C_4$, un carboxy de formule —COOM, un atome d'halogène, un sulfo de formule —$SO_3M$ ou un radical —$SO_2$—Y (dans lequel Y a la signification indiquée ci-dessous), dans le cas où D représente un noyau naphtalénique, et

$R^2$ représente un atome d'hydrogène ou un radical sulfo de formule —$SO_3M$, dans le cas où D représente un noyau naphtalénique, ou

$R^1$ représente — dans le cas où D représente un radical de formule 2 — un atome d'hydrogène, un radical nitro, un atome de chlore ou un radical alcoxy en $C_1$-$C_4$, $R^1$ étant lié au noyau benzénique V, et

$R^2$ représente — dans le cas où D représente un radical de formule 2 — un atome de chlore, un radical sulfo de formule —$SO_3M$, un radical nitro ou, mieux, un atome d'hydrogène, $R^2$ étant lié au noyau benzénique W, ou

$R^1$ représente — dans le cas où D désigne un radical de formule 3 — un atome d'hydrogène, un radical nitro ou un radical sulfo de formule —$SO_3M$, $R^1$ étant lié au noyau benzénique V, et

$R^2$ représente — dans le cas où D désigne un radical de formule 3 — un atome de chlore, un radical sulfo de formule —$SO_3M$ ou, mieux, un atome d'hydrogène, $R^2$ étant lié au noyau benzénique W,

le radical —$SO_2$—Y, dans les formules 2 et 3, est lié à V ou à W, de préférence à V,

Y représente le radical vinyle ou un radical éthyle qui porte, en position β, un substituant éliminable à l'état d'anion en milieu alcalin,

R représente un atome d'hydrogène ou le radical carbamoyle,

B représente un alkyle en $C_1$-$C_4$ qui porte un radical sulfato de formule —$OSO_3M$, un radical phosphato de formule —$OPO_3M_2$, un radical carboxy de formule —COOM ou un radical sulfo de formule —$SO_3M$,

M représente un atome d'hydrogène ou l'équivalent d'un métal univalent, bivalent ou trivalent, plus spécialement d'un métal alcalin ou alcalino-terreux, et

les radicaux B, $R^1$, $R^2$ et R peuvent avoir des significations identiques les unes aux autres ou différentes les unes des autres.

2. Composé selon la revendication 1 caractérisé en ce que D est un noyau benzénique, $R^1$ représente un atome d'hydrogène, un radical alkyle en $C_1$-$C_4$, un radical alcoxy en $C_1$-$C_4$ ou un atome de chlore, et $R^2$ représente un atome d'hydrogène, un radical alcoxy en $C_1$-$C_4$, un radical carboxy ou un radical sulfo.

3. Composé selon la revendication 1 qui répond à la formule générale suivante :

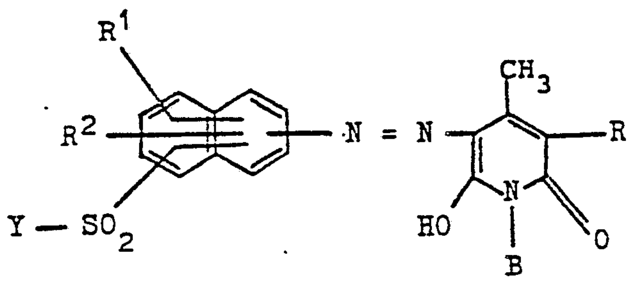

dans laquelle $R^1$ représente un atome d'hydrogène ou un radical sulfo, $R^2$ représente un atome d'hydrogène ou un radical sulfo, et B, R et Y ont les significations données à la revendication 1.

4. Composé selon la revendication 1 qui répond à la formule générale suivante :

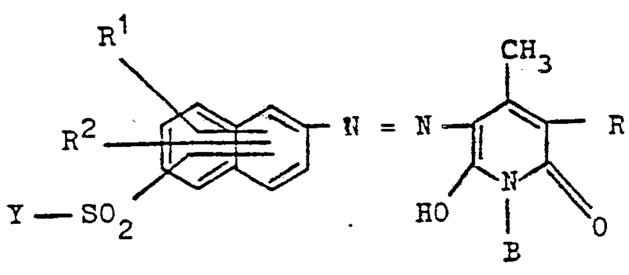

dans laquelle $R^1$ représente un atome d'hydrogène ou un radical sulfo, $R^2$ représente un atome d'hydrogène ou un radical sulfo, et B, R et Y ont les significations données à la revendication 1.

5. Composé selon la revendication 1 qui répond à la formule générale 4a :

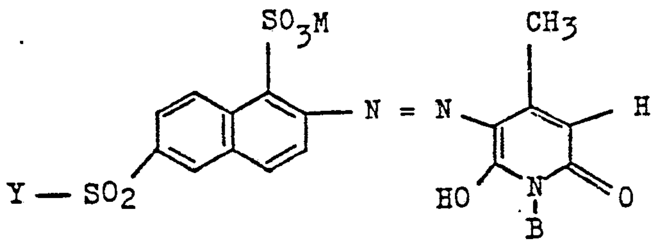

(4a)

dans laquelle B, M et Y ont les significations données à la revendication 1.

6. Composé selon la revendication 1 qui répond à la formule générale 4b :

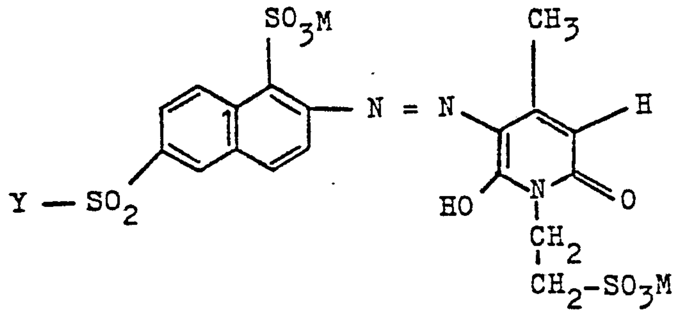

(4b)

dans laquelle M et Y ont les significations données à la revendication 1.

7. Composé selon la revendication 1 qui répond à la formule générale 4c :

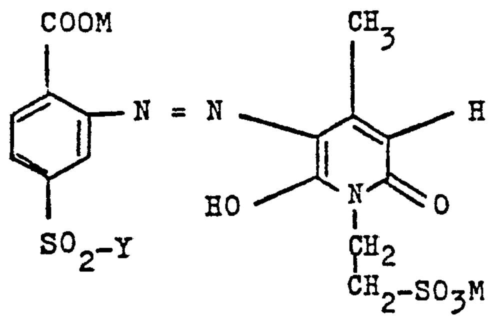

(4c)

dans laquelle M et Y ont les significations données à la revendication 1.

8. Composé selon l'une quelconque des revendications 1 à 5, caractérisé en ce que B représente un radical alkyle en $C_1$-$C_3$ qui porte un radical sulfo ou un radical carboxy.

9. Composé selon l'une quelconque des revendications 1 à 4, caractérisé en ce que B est un radical sulfo-2 éthyle.

10. Composé selon l'une quelconque des revendications 1 à 4, 8 et 9, caractérisé en ce que R représente un atome d'hydrogène.

11. Composé selon l'une quelconque des revendications 1 à 10, caractérisé en ce que Y représente le radical vinyle ou un radical thiosulfato-2 éthyle, phosphato-2 éthyle, chloro-2 éthyle, alcanoyloxy-2 éthyle, l'alcanoyle contenant de 2 à 5 atomes de carbone, ou sulfato-2 éthyle.

12. Composé selon l'une quelconque des revendications 1 à 10, caractérisé en ce que Y représente le radical vinyle ou un radical sulfato-2 éthyle.

13. Composé selon l'une quelconque des revendications 1 à 12, caractérisé en ce que M représente un atome d'hydrogène ou un métal alcalin.

14. Procédé de préparation des composés de formule générale 1 qui ont été définis à la revendication 1, procédé caractérisé en ce qu'on copule un dérivé diazoïque d'une amine répondant à la formule générale 5 :

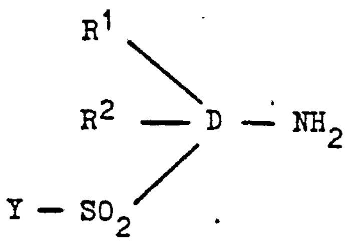

(5)

dans laquelle $R^1$, $R^2$ et Y ont les significations données à la revendication 1, avec une pyridone répondant à la formule générale 6 :

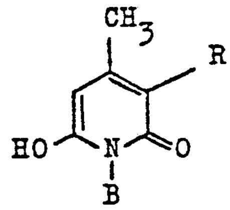

(6)

dans laquelle R et B ont les significations données à la revendication 1, ou en ce qu'on transforme un composé azoïque répondant à la formule générale 7 :

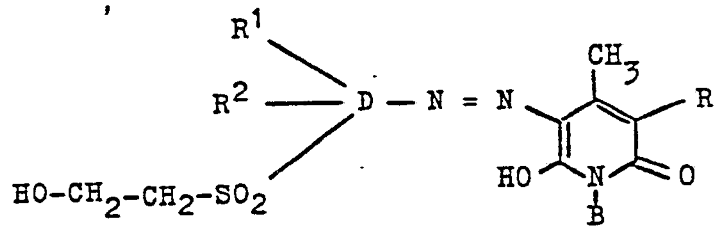

(7)

dans laquelle $R^1$, $R^2$, R, B et D ont les significations données à la revendication 1, au moyen d'un agent d'estérification ou d'acylation correspondant au composé final de formule générale 1, en un composé de formule générale 1 dans lequel Y représente un radical éthyle qui porte, en position β, un radical d'ester, de préférence un radical sulfato.

15. Procédé de préparation de ceux des composés de formule générale 1 définis à la revendication 1 dans lesquels R représente le radical carbamoyle et Y un radical sulfato-2 éthyle, procédé caractérisé en ce qu'on fait réagir un composé répondant à la formule générale 8 :

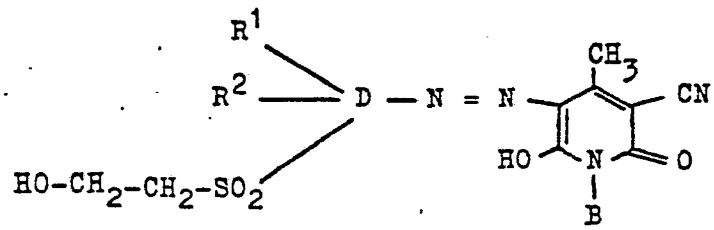

(8)

dans laquelle $R^1$, $R^2$, B et D ont les significations données à la revendication 1, avec un acide sulfurique d'une concentration comprise entre 96 et 99 %, à une température comprise entre 0 et 80 °C.

16. Procédé de préparation d'un composé de formule générale 1 définie à la revendication 1 mais dans lequel Y représente un radical sulfato-2 éthyle, B un radical alkyle en $C_1$-$C_4$ porteur d'un radical sulfato, et R un radical carbamoyle, procédé caractérisé en ce qu'on fait réagir un composé répondant à la formule générale 9 :

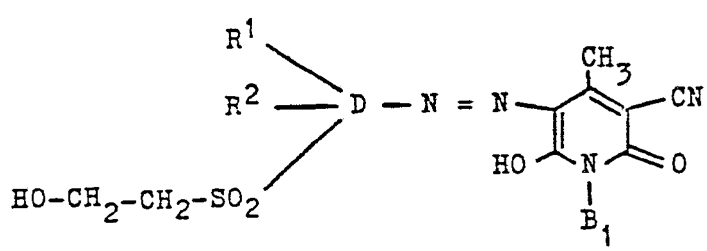

(9)

dans laquelle $R^1$, $R^2$ et D ont les significations données à la revendication 1 tandis que $B_1$ représente un radical hydroxy-alkyle, avec un acide sulfurique d'une concentration comprise entre 96 et 99 %, à une température de 0 à 80 °C.

17. Application des composés de formule générale 1 qui ont été définis à la revendication 1, comme colorants, plus particulièrement pour la teinture et l'impression de matières contenant des radicaux hydroxy et/ou carbamoyles, plus particulièrement de matières fibreuses de ce genre.